# EUROPEAN PATENT APPLICATION

(11) **EP 4 369 253 A1**
(43) Date of publication of application: **15.05.2024**
(21) Application number: 22206625.0
(22) Date of filing: 10.11.2022
(51) Int. Cl.: G06N 3/0455, G06N 3/098, H04L 5/00, H04W 52/04

(54) **DATASET SHARING TRANSMISSION INSTRUCTIONS FOR SEPARATED TWO-SIDED AI/ML BASED MODEL TRAINING**

(71) Applicant: Nokia Technologies Oy, 02610 Espoo (FI)
(72) Inventor: Jayasinghe Laddu, Keeth Saliya, 02140 Espoo (FI); Ali, Amaanat, 02250 Espoo (FI); Enescu, Mihai, 02200 Espoo (FI)
(74) Representative: MERH-IP Matias Erny Reichl Hoffmann Patentanwälte PartG mbB

(57) **Abstract**

The present disclosure relates to a method and a system for improving the establishment of a two-sided AI/ML based model implemented in an apparatus API - APX, such as an user equipment, UE, and a device DEI - DEY, such as a server or a gNodeB, gNB, in a wireless network system in which, by sending configuration information providing instructions regarding at least what to share for data set sharing between the apparatus AP1 - APX and the device DEI - DEY, an efficient separated or sequential training of the two-sided model can be generated.

## Description

### TECHNOLOGY

The present disclosure relates to a method and a system for improving the establishment of a two-sided AI/ML based model implemented in an apparatus, such as an user equipment, UE, and a device, such as a server or a gNodeB, gNB, in a wireless network system in which, by sending configuration information providing instructions regarding at least what to share for data set sharing between the apparatus and the device, an efficient separated or sequential training of the two-sided model can be generated.

### BACKGROUND

Any discussion of the background art throughout the specification should in no way be considered as an admission that such art is widely known or forms part of common general knowledge in the field.

The emergence of Artificial Intelligence (AI)/Machine Learning (ML) based service implementations in at least fourth- (4G) as well as firth-generation technology standard (5G) wireless networks has driven the need to study new use cases and to propose new potential service requirements for introducing enhanced dataset sharing strategies in said network systems, specifically for utilizing two-sided AI/ML models performing joint inferences across a multiple of network elements such as a user equipment (UE) and a gNodeB (gNB).

On that account, a new Study Item (SI) RP-213599 "Study on Intelligence (AI)/Machine Learning (ML) for NR Air Interface" started in RAN3 #94e which set the objective to specifically exploring the benefits of augmenting the air interface with features enabling support of AI/ML-based algorithms for enhanced performance and/or reduced complexity/overhead. Here, the SI's target is to lay the foundation for future air-interface use cases leveraging AI/ML techniques, covering e.g. Channel Status Information (CSI) feedback enhancement (e.g. overhead reduction, improved accuracy), beam management (e.g. beam prediction in time, spatial domain for overhead and latency reduction) or position accuracy enhancements.

Based on this, in 3GPP TSG RAN WG1 #109e, an implementation of two-sided AI/ML models were subsequently proposed, mainly for CSI-compression as a representative sub use case, wherein a two-sided AI/ML model were seen to be at least a paired AI/ML model over which joint inference across multiple network elements, such as a UE and a gNB, were performed, e.g. by initially performing a first part of inference by the UE and then performing the remaining part by the gNB (or vice versa). Accordingly, as a starting point, the two-sided model of the study case considered at least an AI/ML-based CSI generation part at the UE-side to generate and send a CSI feedback information to a given network element (gNB) and an AI/ML-based CSI reconstruction part at the gNB-side used to reconstruct the CSI from the received CSI feedback information.

Moreover, in 3GPP TSG RAN WG1 #110 and #110-bis-e, different AI/ML model training collaboration methods were stipulated for the above-mentioned two-sided AI/ML model, including a separated training at both sides of the respective model (i.e. in which the CSI generation part and the CSI reconstruction part are trained by their corresponding sides sequentially - e.g. starting with an UE side training and then an network side training or starting with a network side training and then an UE side training or parallel training). Specifically, for this, it was suggested to approach a given model training by initially training the CSI generation part and the CSI reconstruction part jointly at a specific first side network element, such as a UE, and subsequently, after the CSI reconstruction part training is finished, share a second side network element (e.g. a gNB) with a set of information (e.g. a dataset) to be used by the second side network element to be able to train the second side CSI generation part.

However, despite the current efforts to improve the stability and adaptability of said two-sided AI/ML models in wireless network systems, there is still the problem that due to the dynamic and proprietary architecture of common wireless networks, essential information for at least enabling the above-mentioned two-sided separated training mechanism can be lost or modified, resulting in a substantial diminishment of the efficiency of the respective two-sided model.

For example, since the aforementioned training strategy requires to share datasets between at least two different network elements, it is important to know what is shared as a dataset since e.g., without having fundamental knowledge about the properties (as an example, the format) of the inherent data, a receiving network element required to input the shared data set for subsequent training may not be able to fully use all of the data's information. Equally, sharing a dataset in different formats by different network elements may create troublesome operations if the receiving network element plans to consider mixed data across different data sets e.g., in case of two-sided model decoder training across multiple UEs. Similarly, due to different proprietary or privacy concerns within corresponding network elements, it is likewise important to know what is considered important at a given network element as in some cases a given network element may not reveal some information about the underlying model while others will do.

Thus, there is a need to propose a new method and apparatus for AI/ML based two-sided model training, specifically separated model training, that addresses some or all of the above-stated problems in an efficient, flexible and yet reliable manner.

### SUMMARY

According to some aspects, there is provided the subject-matter of the independent claims. Some further aspects are defined in the dependent claims.

According to a first aspect of the present disclosure, there may be provided an apparatus in a wireless network comprising: one or more processors and a memory storing instructions that, when executed by the one or more processors, cause the apparatus to: receive information to configure the apparatus to share data to be used for training a two-sided model, the two-sided model facilitating data communication between the apparatus and another device in the wireless network, the information indicating **which data to be shared** with the another device; train at least a first side of the two-sided model by a machine learning algorithm based on training data available at the apparatus; determine, from the training data, a data set to be shared according to the received configuration information; transmit the determined data set for usage by the another device to train at least the second side of the two-sided model separately from the first site.

According to a second aspect of the present disclosure, the apparatus may be further caused to use the first side of the two-sided model in communicating with the another device, and the configuration information indicates whether input data and/or output data of the first side of the two-sided model during the training shall be shared with the another device.

According to a third aspect of the present disclosure, a hypothetical second side of the two-sided model may be determined during training by the apparatus and wherein the configuration information indicates whether any data used for training of the hypothetical second side is to be shared.

According to a fourth aspect of the present disclosure, the configuration information may indicate whether a metric regarding the relationship between first side training data and training data of the hypothetical second side is to be shared.

Regarding to a fifth aspect of the present disclosure, the configuration information may indicate a preconfigured data set to be shared.

Regarding to a sixth aspect of the present disclosure, the configuration information may indicate **when to share the data** with the another device and may indicate at least one of a time instance, a sharing condition or a sharing trigger.

Regarding to a seventh aspect of the present disclosure, the configuration information may indicate **how to share the data** with the another device and may indicate at least one of a format for sharing the data, a communication medium for sharing the data, or priorities for shared data.

Regarding to an eighth aspect of the present disclosure, the configuration information and/or the shared data set may be transmitted by signalling via an over-the-air interface or via a remote server between the apparatus and the another device.

Regarding to a ninth aspect of the present disclosure, the configuration information may relate to an initial training of the two-sided model, or to an update of the two-sided model based on new training data.

Regarding to a tenth aspect of the present disclosure, the configuration information may comprise at least one of sharing information comprising one or more data set identifiers that point to a set/batches of data set to be shared with the another device, format information describing a vector that includes the dimension of the data set to be shared, or reporting configurations specifying data to be used for the at least first side of the two-sided model.

Regarding to an eleventh aspect of the present disclosure, the two-sided model may facilitate compression/decompression of channel state information, CSI, and the first side of the two-sided model may relate to compression of information regarding the wireless channel, and the second side of the two-sided model relates to decompression of the wireless channel information.

Regarding to a twelfth aspect of the present disclosure, the two-sided model may facilitate channel encoding/decoding and the first side of the two-sided model may relate to encoding of data for transmission to the another device, and the second side of the two-sided model may relate to decoding of data received by the another device.

Regarding to a thirteenth aspect of the present disclosure, the apparatus may be a user equipment, UE, in the wireless network.

Regarding to a fourteenth aspect of the present disclosure, there may be also provided a device in a wireless network comprising: one or more processors and a memory storing instructions that, when executed by the one or more processors, cause the device to: send information to configure an apparatus in the wireless network to share data to be used for training a two-sided model, the two-sided model facilitating data communication between the apparatus and the device in the wireless network, the information indicating **which data to be shared** by the apparatus with the device; receive the shared data from the apparatus; train at least the second side of the two-sided model by a machine learning algorithm based on the received data.

Regarding to a fifteenth aspect of the present disclosure, the device may be a next generation radio access network, NG-RAN node, such as a gNB, in the wireless network and the apparatus may be a user equipment, UE, in the wireless network.

Regarding to a sixteenth aspect of the present disclosure, the device may train and maintain UE-specific models, each applied for communication with an individual UE.

Regarding to a seventeenth aspect of the present disclosure. the device may receive shared data from a plurality of LTEs and train the at least the second side of the two-sided model based on a collection of the received shared data from different UEs.

Regarding to an eighteenth aspect of the present disclosure, the training of the second side of the two-sided model may be at least based on a reference output of a hypothetical second side determined during training of the two-sided model by the apparatus, wherein the reference output may be at least a part of the shared data of the apparatus.

Regarding to a nineteenth aspect of the present disclosure, there may be also provided a first method for training a two-sided model facilitating data communication between an apparatus and another device in a wireless network, comprising: receiving, by the apparatus, information to configure the apparatus to share data to be used for training the two-sided model, the information indicating **which data to be shared** with the another device; training at least a first side of the two-sided model by a machine learning algorithm separately from a second side of the two-sided model based on training data available at the apparatus; determining, from the training data, a data set to be shared according to the received configuration information; transmitting the determined data set for usage by the another device to train at least the second side of the two-sided model separately from the first side.

Regarding to a twentieth aspect of the present disclosure, there may be also provided a second method for training a two-sided model facilitating data communication between an apparatus and another device in a wireless network, comprising: sending information to configure the apparatus in the wireless network to share data to be used for training the two-sided model, the information indicating **which data to be shared** by the apparatus with the device; receiving the shared data from the apparatus; training at least the second side of the two-sided model by a machine learning algorithm based on the received data.

Regarding to a twenty-first aspect of the present disclosure, the configuration information may indicate **when to share the data** with the another device and/or **how to share the data** with the another device.

Regarding to a twenty-second aspect of the present disclosure, there may be also provided a computer program comprising instructions for causing the apparatus or the device to perform the aforementioned methods according to the nineteenth to twenty-first aspect of the present disclosure.

Regarding to the twenty-third aspect of the present disclosure, there may be also provided a memory storing computer readable instructions for causing the apparatus or the device to perform the aforementioned methods according to the nineteenth to twenty-first aspect of the present disclosure.

Herein, the computer program and the memory storing computer readable instructions may be directly loadable into the internal memory of the computer and/or transmittable via a network by means of at least one of upload, download and push procedures.

In accordance, while some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

It is to be understood that any of the above-mentioned modifications can be applied singly or in combination to the respective aspects to which they refer, unless explicitly stated as excluding alternatives.

According to the disclosure, it is therefore possible to overcome the issue of undefined dataset transmission for two-sided AI/ML based models between at least an apparatus and a device implemented within a wireless network. Further, it is possible to adjust said training datasets to the specific requirements of the network elements and thus improve the overall efficiency of the two-sided model system integration.

### BRIEF DESCRIPTION OF THE DRAWINGS

Further details, features, objects and advantages are apparent from the following detailed description of the preferred embodiments of the present disclosure which is to be taken in conjunction with the appended drawings, wherein:
Fig. 1 shows an example of a 2-sided AI/ML model training transmission connection system;
Fig. 2 shows an apparatus and device dependent sequence of a two-sided AI/ML model training steps including a first side of the two-sided model at the apparatus, a second side of the two-sided model at the device and a hypothetical second side at the apparatus;
Fig. 3 shows a message exchange between an apparatus, defined as an user equipment, UE, and a device, defined as a network part such as a gNB, for a two-sided AI/ML model implementation between both network elements.

### DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network (RAN) elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances:
- a "server", specifically a gNB, comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference. Moreover, the following description and the proposed features of the present disclosure are not limited to be applied to the indicated framework but may also be applicable to other generations such as Long Term Evolution (LTE) technology and eNBs or other technologies such as LTE-Advanced (LTE-A) technology.
- A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connections and/or the above-mentioned AI/ML model implementations. A UE is e.g., configured to generate a message (e.g., including a cell ID) to be transmitted via radio towards for example a RAN (e.g., to reach and communicate with a serving cell). A UE may generate and transmit and receive RRC messages containing one or more RRC PDUs (Packet Data Units).
- Further, an AI/ML model may be defined in line with RANI #109-e, at least as a data drive algorithm that applies AI/ML techniques to generate a set of outputs based on a set of inputs. Consequentially, AI/ML model training is seen as a process to train an AI/ML model (by learning the input/output relationship) in a data driven manner and obtain the trained AI/ML model for inference.
- In addition, AI/ML model inference shall be at least defined as a process of using a trained AI/ML model to produce a set of outputs based on a set of inputs. Herein, one may at least differentiate between a one-sided AI/ML model, being an AI/ML model who's inference is performed entirely at one network entity, such as at a UE or a server side (e.g. a gNB) and a two-sided AI/ML model being a paired model over which joint inference is performed. At it, joint inference may be defined at least an AI/ML inference whose inference is performed jointly across at least two network entities such as an UW and a gNB, i.e. a first part of inference may be firstly performed by an UE and then a remaining part may be performed by a gNB, or vice versa.
- Furthermore, a "AI/ML model transfer" may at least correspond to a delivery of a model via an over-the-air interface, while either parameters of a respective model structure known at a receiving end or a new model with parameters may be transmitted. In addition, delivery may contain a full model or a partial model. In addition, a model may be downloaded, i.e. transferred at least from a network to an UE or uploaded, i.e. transferred at least from an UE to the network.

The UE may have different states (e.g., according to 3GPP TS 38.331 V16.5.0 (2021-06) sections 42.1 and 4.4, incorporated by reference).

A UE is e.g., either in RRC _CONNECTED state or in RRC INACTIVE state when an RRC connection has been established.

In RRC CONNECTED state a UE may:
∘ store the AS context;
∘ transfer unicast data to/from the UE;
∘ monitor control channels associated with the shared data channel to determine if data is scheduled for the data channel;
∘ provide channel quality and feedback information;
∘ perform neighboring cell measurements and measurement reporting.

The RRC protocol includes e.g. the following main functions:
∘ RRC connection control;
∘ measurement configuration and reporting;
∘ establishment/modification/release of measurement configuration (e.g. intra-frequency, inter-frequency and inter-RAT measurements);
∘ setup and release of measurement gaps;
∘ measurement reporting

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

Further, when speaking of a two-sided AI/ML model, said model may be, as stated before, executed and/or trained at least two network entities such as at a gNB side and/or an UE side. Herein, the aforementioned network entities may have one or more trained or to be trained models available and the models are preferable configured to solve a certain predetermined problem, preferably an optimization problem, that will be further exemplified below. Additionally, a given network entity may also have a non-ML algorithm implemented internally (e.g. native in the network entity). Accordingly, the respective network may be able to instruct the network entity which model the network entity should use at any given time and when to activate this model.

On the other hand, as indicated before in the above-stated description, as for a two-sided AI/ML model application a joint inference is always necessary at the different network entity parts, such as UE and network-sided parts, a careful consideration on model training and model updating is required to make sure inference performance is kept in a good level (i.e. it is reliable and operates under predetermined limits). Herein, as may for example be discussed in RANI #110-bis-e, separate or sequential training of the two-sided AI/ML model, i.e. a training process in which the AI/ML model is initially trained at one model side (e.g. at a UE-model side) and is then completely trained at the other model side (e.g. a network-model side), may be preferential as such an individual training process allows for simple, accessible and efficient update and adaptation possibilities. On the other side, however, since for such a training process accurate transmissions of training datasets from the first to the second model side becomes crucial to enable an efficient model training (and thus inference quality), there is a need for an adaptive training data set transmission strategy, specifically so as to adjust a given training data transmission to the specific properties of the network entities the two-sided model is applied to.

As a consequence, for example, for such a transmission process it becomes important to know what is to be shared as a training dataset since specific network entities might not be compatible with certain data properties such as formats. Moreover, depending on what is to be shared, certain network entities, for examples gNBs, might be contained with different proprietaries or privacy concerns so that not all information transmitted and/or received by a given network entity might be accessible. Lastly, it is also reasonable to assume that dataset sharing or updating can be applied offline (e.g. via uploading to a remote server). However, in case online transmission (e.g. dataset transmission via an air interface) is to be used as well (as, for example, quick model updates may be more efficiently implemented in this way), different assistance signaling may be needed to control this operation, leading to the fact that also the question of what changes are required for on-air-interface transmission have to be solved, prior to the actual dataset sharing process.

Accordingly, to overcome the above-mentioned problem, the subject matter of the independent claims is proposed. Specifically, it is proposed to provide the aforementioned sought training data transmission strategy by at least providing an additional configuration information sent by a network entity (further defined as "device"), wherein said network entity may be preferentially be the receiving end of the training data to be shared for the two-sided AI/ML model, to another network entity (further defined as "apparatus") being responsible for the first model-side training, wherein the aforementioned configuration information may comprise at least instructions regarding, for example, which data to be shared with the device. As a consequence, by additionally supplying specific transmission information to the training data sending end of the two-sided model, by means of the configuration information, an exceedingly adapted and thus efficient two-sided model training can be enabled.

As a consequence, by the present invention, there is provided at least said apparatus in a wireless network comprising: one or more processors and a memory storing instructions that, when executed by the one or more processors, cause the apparatus to: receive information to configure the apparatus to share data to be used for training a two-sided model, the two-sided model facilitating data communication between the apparatus and another device in the wireless network, the information indicating which data to be shared with the another device; train at least a first side of the two-sided model by a machine learning algorithm based on training data available at the apparatus; determine, from the training data, a data set to be shared according to the received configuration information; and transmit the determined data set for usage by the another device to train at least the second side of the two-sided model separately from the first site.

Accordingly, by the above-mentioned disclosure, a mechanism is provided that, by means of specific configuration information, enables an adjusted transmission of training data of a two-sided model from a first network element (herein, the above-mentioned apparatus), comprising a first model side, to a second network element (the another device), comprising the respective second model side of the two-sided model, leading to the effect that the respective training data to be sent to the another device can be efficiently adapted to the requirements of the corresponding network elements. More specifically, by providing specific configuration information usable as instructions on what to share from the first to the second network element (even prior to conducting the respective two-side model training at the first and second model side), a given training process may be efficiently customized to the conditions applied between the two network elements, resulting in a termination of the above-mentioned dataset transmission problems.

Herein, in some examples, the respective apparatus may be one of several apparatuses implemented in the respective wireless network. Further, also the another device may be only one of several devices implemented in a given wireless network while neither the number of apparatuses nor the number of devices in the present invention may be limited to a specific quantity. In addition, there also may be multiple models implemented within the system and its network elements respectively, each corresponding to a different system configuration/scenario and/or data sets to be used.

Further, in some examples, the aforementioned apparatus may be preferentially caused to use the first side of the two-sided model in communication with the another device, and the configuration information may indicate whether input data and/or output data of the first model side during the training shall be shared with the another device. Herein, input data may for example at least refer to input data at the pre-processing of the first-model side of the two-side model or input at the first model side of the two-side model. Also, output data may refer at least to data at the output of the first model side of the two-sided model or output of a quantizer considered after the first model side (in case of transmission). Accordingly, the respective configuration information may have one or several data sets included which are to be shared with the at least another device.

In another example, the configuration indication may also indicate whether any data used for training of the second model side is to be shared and/or whether a metric regarding the relationship between first model side training data and second model side training data is to be shared. Consequently, within the present disclose, not only pure input or output information may be included in the corresponding configuration information but also e.g. mathematical assignments such as functions, statistical relationships or format requirements of the first and/or second model side are to be considered. Furthermore, these metrics may also be preferentially derived based at least on the aforementioned input and/or output data sets of the first model side, in case the respective data is not already included in the data set to be shared to the another device.

Moreover, in another example, also a hypothetical second side of the two-sided model may be determined during training by the apparatus, wherein the configuration information may indicate whether any data used for training of the hypothetical second model side is to be shared and/or whether a metric regarding the relationship between first model side training data and training data of the hypothetical second model side is to be shared. This has specifically the advantage that also additional input parameters, such as training data generated during training of the second model side in the apparatus, may be generated, leading to supplementary information to be used for configuration information constructions. Accordingly, said training data of the hypothetical second model may be, for example, preferentially used as a feedback for the training in the another device or can be equally implemented in the aforementioned metrics.

In addition, the configuration information may also indicate a preconfigured data set to be shared. Herein, preconfigured data may include for example data coming from apparatus capability reportings.

In another example, the configuration information may likewise indicate when to share the data with the another device and indicate at least one of a time instance, a sharing condition or a sharing trigger. Specifically, in one example, a time to share the data set from the apparatus to the at least another device may be defined by completing the initial first model side training, wherein in this case, the dataset corresponding to the model training may be shared with the at least another device.

In another example, a time for sharing a given data set may be also defined by an update of at least the first model side. Particularly, the apparatus may share the dataset before or after a model update is performed. Alternatively, when for example the first model side requires an update to the apparatus-part used for inference, the dataset corresponding to the model update (even that is done already by the apparatus prior to a network consent) may also not be directly shared to the at least another device but the apparatus may initially trigger a request for model update and subsequently do the data sharing, resulting in a more secure and efficient transmission mechanism.

Further, in even an another example specifically for model updates, a potential trigger for model update/dataset sharing may be determined based on parallel model monitoring activity. In particular, a model update (which also may lead to a dataset update) may be for example triggered when a first model side and another model side, such as for example the aforementioned hypothetical second model side, of the two-sided model observe different performances, leading to the effect that the claimed subject matter includes an automatic model quality assessment strategy while providing the corresponding configuration information.

In addition, in another example, the configuration information may also indicate how to share the data with the another device and indicate at least one of a format for sharing the data, a communication medium for sharing the data, or priorities for shared data. Specifically, a format of the dataset may be preferentially received and/or defined by the another device, while the another device may be preferentially an implemented element of the network, such as a gNB Further, the format of the dataset may preferentially comprise for example the datasets dimensions or size (sample size), ordering of the information carried with the dataset, quantization information corresponding to information of whether quantization is applied for entries of data or any other type of information that may allow another party, specifically the another device, to interpret the dataset.

Moreover, the configuration information and/or the determined data set may be preferentially transmitted by signalling via an over-the-air interface or via a remote server implemented in the network between the apparatus and the another device.

Herein, an indication of whether the dataset shall be reported via one of the aforementioned network means (or even other means which may be known to the apparatus prior to this indication) may be preferentially defined by one of the following aspects.

If the dataset sharing may be done via an over-the-air interface, any configuration that define reporting resources and/or periodicities and/or maximum dimensions per transmission batch or report may be defined by the at least another device being preferentially an implemented network element such as a gNB. On that account, the apparatus may be configured to send the training dataset to be shared with the another device at least in one or multiple transmission batches which may be based on the received configuration information.

On the other hand, if the dataset sharing may be done via a remote server, any configuration that may define reporting of confirmation after a successful dataset upload may be initially defined by the another device. On that basis, the apparatus may then be configured to upload the training dataset and send the confirmation of the dataset upload via a higher-layer and/or dynamic signalling such as via over-the-air interface to the another device.

Moreover, the configuration information may also include different priority levels considered for different data in the dataset. For example, some data may be equipped with a lower priority level marker, resulting in an exclusion of the data from the dataset in case the dataset-sharing resources may be limited. On that account, the apparatus or the another device may be preferentially configured to equip a corresponding data implemented into the shared dataset with a lower priority marker while an additional analysis entity implemented in the apparatus or the another device may analyse the shared data set prior to the transmission process and exclude low priority data, in case low dataset-sharing resources within the network are detected (e.g. by an additional detection means).

In another example, the configuration information may preferentially relate to an initial training of the two-sided model, or to an update of the two-sided model based on new training data.

On that account, the another device may be for example also configured to indicate a number of different apparatuses with the same or different set-up of dataset collections and thus consider to train/update the second method side of the two-sided model using a most-reliable or higher quality dataset. For this, the another device may be for example configured to compare the datasets received from the different apparatuses and train or update the second model side part of the two-sided model based at least on a predetermined quality identifier. For this, in one variant, the another device may for example be configured to compare the data received from the different data sets and identify the quality of the transmitted data by a difference between a first value of a metric reported by a respective apparatus and a second value of one metric. Herein, this difference of metrics may for example represent a relationship between an input used by the first model side and a corresponding output at the second model side of the two-sided model, resulting in the fact that a detected small difference may result in a high quality identifier and thus to a data set preferably to be used for second model side training and/or updating. Consequently, with the additional analysis step, an even more efficient training and updating strategy of at least the second model side may be generated.

Furthermore, in another example, the configuration information may also comprise at least one of sharing information comprising of one or more data set identifiers that point to a given set or batch of data set to be shared with the another device, format information describing a vector that includes the dimension of the data set to be shared or reporting configurations specifying data to be used for the at least first side of the two-sided model. Specifically, within the sharing information, each data set may be associated with a predetermined ID which may be unique and serve a specific deployment scenario for a given use case. In addition, a format information may equally comprise quantization information of the corresponding data, i.e. for example the bid width of the corresponding data samples or number of training samples that the apparatus uses along with the sharing information. Lastly, also the reporting configuration may be preferentially constructed at least based on the combination of the following data:
- Input at the pre-processing of the first model side of the two-sided model,
- Input at the first model side of the two-sided model,
- Output of the first model side of the two-sided model,
- Output of a quantizer considered after the first model side of the two-sided model,
- Output of a hypothetical de-quantizer considered before the hypothetical second model side of the two-sided model,
- Output of the hypothetical second model side of the two-sided model,
- Output of the post-processing of the hypothetical second model side of the two-sided model.

In another example, the corresponding two-sided model may further particularly facilitate compression/decompression of channel state information, CSI, and the first model side may specifically relate to compression of information regarding the wireless channel, and the second model side may relate to decompression of the wireless channel information, resulting in a direct contribution and utilization of the claimed subject matter for the aforementioned RAN standardizations, specifically relating to the standards of 3GPP TSG RAN WG1 #110 and #110-bis-e. In other examples, it may yet also be possible that the corresponding two-sided model may be used for other network methodologies, including e.g. facilitation of channel encoding/decoding, so that the respective invention may be applied for other use cases or even standards (e.g. 6G).

Further, in one example, the apparatus may correspond to a user equipment, UE, in the wireless network while the another device may correspond to a server, particularly a gNB of the wireless network. Vice versa, in another example, the apparatus may be also defined as the server, particularly the gNB, while the another device may be one or even more UEs. Accordingly, an improved two-side AI/ML based model may be implemented across the UE and the server, resulting in an efficient and user-friendly transmission interaction.

Alternatively, there also may be provided the device in a wireless network comprising:one or more processors and a memory storing instructions that, when executed by the one or more processors, cause the device to: send information to configure an apparatus in the wireless network to share data to be used for training a two-sided model, the two-sided model facilitating data communication between the apparatus and the device in the wireless network, the information indicating which data to be shared by the apparatus with the device; receive the shared data from the apparatus; train at least the second side of the two-sided model by a machine learning algorithm based on the received data.

Herein, in one example of the second aspect, the device may be a next generation radio access network, NG-RAN node, such as a gNB, in the wireless network and the apparatus is a user equipment, UE, in the wireless network.

In addition, in another example, the device may be configured to train and maintain UE-specific models, each applied for communication with an individual UE. Specifically, as stated before, each UE may contain one or more two-sided models connected with the device at least by the aforementioned joint inference. Further, in order to receive a given dataset for separated two-sided model training, the device may receive the respective data set at least via download from a remote server or network, placed in by a respective apparatus, and/or via an over-the-air interface existing between the device and the given apparatus. Moreover, the device may again be configured to indicate different UEs with the same or different set-up for dataset collection and may be configured to consider training and/or updating the second model side of the two-sided model at least using a most-reliable dataset(s) or higher quality dataset(s) as already stated before. As a consequence, in another example, the device may thus also receive shared data from a plurality of UEs and trains the at least the second model side based on a collection of the received shared data for different UEs.

In another example, the training of the second side of the two-sided model may likewise be at least based on a reference output of a hypothetical second side determined during training of the two-sided model by the apparatus, wherein the reference output is at least a part of the shared data of the apparatus. Specifically, since the two-sided model may preferentially include joint inference across at least the device and the apparatus, required reference output data of a hypothetical second model side may be used as feedback data commonly included in the shared data set for second model side training. Alternatively, said reference output data may be also shared separately and or during a different training loop with the device, resulting in a persistent feedback mechanism within the transmission system.

Further, in accordance with yet a another aspect of the invention, there also may be provided a first method for training a two-sided model facilitating data communication between an apparatus and another device in a wireless network, preferentially implemented in said apparatus, comprising: receiving, by the apparatus, information to configure the apparatus to share data to be used for training the two-sided model, the information indicating which data to be shared with the another device; training at least a first side of the two-sided model by a machine learning algorithm separately from a second side of the two-sided model based on training data available at the apparatus determining, from the training data, a data set to be shared according to the received configuration information; transmitting the determined data set for usage by the another device to train at least the second side of the two-sided model.

Also, in accordance with yet a further aspect of the invention, there also may be provided a second method for training a two-sided model facilitating data communication between an apparatus and another device in a wireless network, preferentially implemented in said device, comprising: sending information to configure the apparatus in the wireless network to share data to be used for training the two-sided model, the information indicating which data to be shared by the apparatus with the device; receiving the shared data from the apparatus; and training at least the second side of the two-sided model by a machine learning algorithm based on the received data.

In yet at least one of the methods mentioned before, as an example, the configuration information may again indicate when to share the data with the another device and/or how to share the data with the another device. Furthermore, also one of the other features specified for the aforementioned device and/or apparatus may be applied to the above-mentioned method and thus may not be repeated in this section.

Further, in accordance with yet another aspect of the invention, there may be likewise provided a network system, comprising: at least one of the apparatuses and at least one of the devices mentioned before, wherein the at least one of the apparatuses and the at least one of the devices are connected via a wireless network and are configured to share datasets for training a two-sided model implemented across the at least one of the apparatuses and the at least one of the devices based on the aforementioned method of sending and/or receiving the configuration information. Moreover, also any of the features specified for the aforementioned device, apparatus and/or method may be applied to the elements of said system, further specification may not be repeated in this section.

Additionally, in accordance with yet another aspect of the invention, there may also be provided a computer program comprising instructions for causing an apparatus or a device described before to perform any of the aforementioned methods and a memory storing computer readable instructions for causing an apparatus or a device described before to perform any of the aforementioned methods.

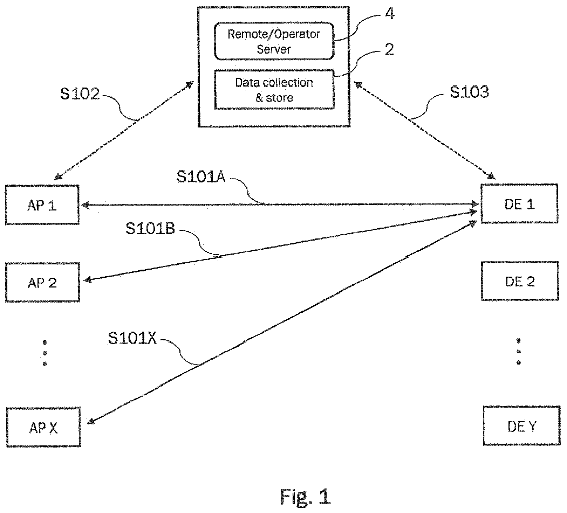

Now referring to the drawings, Fig. 1 shows a first example of a possible connection system between a number of apparatus API to APX being responsible for training and applying the first model side of a two-sided model and a number of devices DEI to DEY being responsible for training and applying the second model side of the respective two-sided model implemented in the apparatuses API to APX. Herein, there may be one or multiple two-sided models implemented within the system, each of them corresponding to different configurations, scenarios and/or datasets to be used. For this, each of the apparatus API to APX holding a corresponding first model side may be, respectively, connected with a corresponding device DEI to DEY holding the second model side of the given two-sided model.

Accordingly, within the given system, either joint (first model side training and second model side training is performed in the same training loop, it is also referred to RANI #110-bis-e) or separate training (i.e. sequential training starting with the training at the first model side and then the second model side or even in parallel) may be applied for model training on the apparatus-device collaboration while, at the same time, at least model training and updates may be conducted offline (i.e. without any model transfer) or online.

In addition, at least in the latter case, for transmission of specific training datasets from the first side model implemented in the apparatuses AP1 to APX to the second model side implemented in the devices DEI to DEY, the apparatuses API to APX may be configured to at least share the corresponding training data set via a remote server/operator server 4 or a direct over-air-interface connection S101A to S101X based on predetermined conditions. On that account, a given apparatus API to APX may, for example, upload a given training dataset via a server connection S102 to the remote server/operator server 4 while the remote server/operator server 4 is configured to store said training dataset in a corresponding data collection and storage unit 2. Subsequently, the corresponding device DEI to DEY holding the respective second model side of the transmission apparatus API to APX may be configured to download the stored training dataset for following second model side training. Herein, upload and download processes to the remote server/operator server 4 may be preferentially conducted with adding a predetermined identifier to the uploaded training dataset. Specifically, by uploading a dataset from one of the apparatuses API to APX, the given training dataset may be attached with a identifier, stored e.g. as metadata in the data collection and storage unit 2, which may be requested by the corresponding device DEI to DEY for a specific download process. On another hand, it may yet be also possible to directly share a given training dataset or updates from an apparatus API to APX to a given device DEI to DEY via higher-layer and/or dynamic signaling, such as for example by the air-interface connections S101A to S101X.

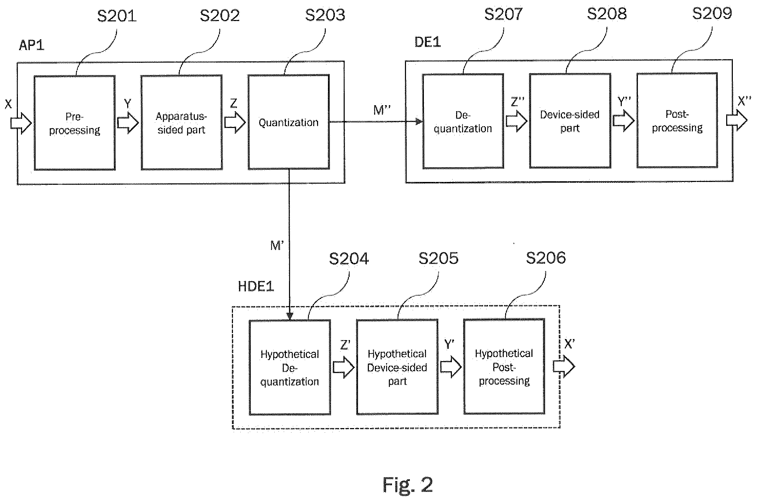

Further, Fig. 2 shows a sequence of an two-sided AI/ML based training process, specifically a separated two-sided AI/ML based training process, according to an exemplary embodiment of the given invention and equally implemented in the transmission system shown in Fig. 1.

Herein, a respective separated two-sided model training process may be initiated by training of the first model side implemented in the apparatus API shown in Fig. 2. Specifically, the first model side training may be started by a predetermined input X, such as a predefined data set used as input for pre-processing S201 of the apparatus-part of the corresponding two-sided model. Subsequently, the pre-processed data then may be used as an input Y for the actual first (i.e. apparatus AP1) side model training S202 while the output Z of said first side model training is thereafter quantized S203 and output M' or M" for subsequent training data transmission.

In addition, since for separated two-sided AI/ML model training the first model side is configured to generated the full two-sided model training process (while, at the same time, not communicate with the second model side in each training iteration step), the apparatus API may be also comprised with an additional, so called "hypothetical second model side HDE1" for also training a complementary second model side part at the apparatus API (mainly so as to complete each of the training loop iterations without explicit training data transmission to the network entity, i.e. the device DEI, holding the second model side). At it, the training process of the hypothetical second model side may be preferentially equal or at least similar to the training process conducted at the second model side, specifically so as to allow a precise output of training data from the first model side. As a consequence, the training process of the hypothetical second model side may comprise at least a first hypothetical de-quantization step at which the quantized output M' coming from the first model side of the apparatus API is de-quantized to the conditions of the hypothetical second model side. Thereinafter, the so generated output Z' of the hypothetical de-quantizer S204 may be then again input into the hypothetical second (i.e. device) model side training algorithm S205 for training the hypothetical second model side, wherein the respective output of S205, hereinafter defined by Y', may be further refined by hypothetical post-processing steps S206 before a final post-processed training output X' of the hypothetical second model side can be generated.

As stated before, the so emergent hypothetical training step may be only conducted for the separated training at the first model side and thus is not required for subsequent model inferences. In further preferred embodiments, the so generated hypothetical outputs Z', Y' and/or X' may be yet not thrown away after generation but are used for feedback to the network system as will be described below.

Furthermore, considering the (actual) second model side training conducted at the corresponding device DEI, the required training process may be, as stated before, preferentially equal or at least similar to the processing steps of the hypothetical second model side training. On that account, a predefined and quantized training data set may be generated as an output M" at the first model side after the first model training is completed. Subsequently, said output M" may be shared/transmitted (e.g. via the transmission possibilities described in Fig. 1) to the device DEI holding the second model side for second model side training, in which it is initially de-quantized S207, output as a respective de-quantized training dataset output Z" and used in a second model side training algorithm process S208 for second model side training. Thereinafter, the so generated training output Y" may be again post-processed in step S209 before the final post-processed training output X" may be used for further purposes (such as actual AI/ML model applications, inference production, storage etc.).

Now, referring to the aforementioned problematic to further improve the training dataset transmission/sharing from the first model side (i.e. the aforementioned apparatus API to APX) to the second model side (i.e. the aforementioned device), the claimed invention may comprise the following:
For apparatus API to APX supporting a two-sided AI/ML model, the apparatus API to APX may receive directly, e.g. from the device DEI holding the second model side and via a higher layer and/or dynamic signaling method such as via on-air-interface, or indirectly (e.g. via the remote server 4) a configuration information providing instructions on at least what to share for dataset sharing for the second model side so as to enable model training and/or updating of the device (i.e. the second model) sided part of the two-sided model, wherein the instructions can be at least one of the following:
The shared dataset may be constructed based on number of training samples, where each training sample may be constructed based on at least one or the combinations of the following data, equally mentioned in the aforementioned Fig. 2:
- The input X at the pre-processing of the first model side-part of the two-sided model,
- The input Y at the first model side-part of the two-sided model,
- The output Z of the first model side-part of the two-sided model,
- The output M' of the quantizer considered after the first model side-part of the two-sided model,
- The output Z' of the hypothetical de-quantizer considered before the hypothetical second model side-part of the two-sided model,
- The output Y' of the hypothetical second model side-part of the two-sided model,
- The output Z' of the post-processing of the hypothetical second model side-part of the two-sided model.

Additionally, each training sample may also contain additional metrics which are derived based on at least any or a combination of the aforementioned data X, Y, Z, M', Z', Y', Z'. For example, a metric may represent the relationship between an input used by the first model sided part X and corresponding output at the hypothetical second model sided part Y' so that a metric may be defined as f(Y, Y'). Further, these additional metrics may be also defined by the specifications and/or configured to the apparatus API to APX and/or apparatus (i.e. first model side)-specific function which may be also reported in the dataset or via other means towards the aforementioned device DEI.

On that account, in one variant, the above-mentioned configuration information indicating preconfigured data-sharing possibilities may be known to the receiving device DEI (e.g. via earlier apparatus capability reporting processes) and the device may select one of the possible data-sharing possibilities at the apparatus API to APX, wherein the dataset-sharing possibilities may be created based on at least one or the combination of one of the data X, Y, Z, M', Z', Y', Z' or the aforementioned additional metrics.

As a consequence, in one embodiment, in which the respective sharing of the training dataset may be for example used for the sub-use case of CSI compression with the two-sided model (e.g. for an auto-encoder), the above-mentioned parameters for defining the configuration information may be one or more of the following:
- The input X at the pre-processing of the first model side-part of the two-sided model being at least a respective channel measurement,
- The input Y at the first model side-part of the two-sided model being at least a corresponding channel eigenvector of the apparatus AP1 to APX,
- The output Z of the first model side-part of the two-sided model being at least a latent space,
- The output M' of the quantizer considered after the first model side-part of the two-sided model being at least a CSI feedback,
- The output Z' of the hypothetical de-quantizer considered before the hypothetical second model side-part of the two-sided model being at least a de-quantified latent space,
- The output Y' of the hypothetical second model side-part of the two-sided model being at least reconstructed channel eigenvectors at the device DEI, and
- The output Z' of the post-processing of the hypothetical second model side-part of the two-sided model being at least a reconstructed channel measurement.
- Further, the at least one metric that represents the relationship between input used by the apparatus (i.e. the first model)-sided part and the corresponding output at the hypothetical device (i.e. second model)-sided part can be as well converted. For example, the function f could be signal-to-interference-plus-noise-ratio (SINR)-difference, cosine similarity or normalized mean square error (NMSE). Further, this metric may be also used as an indication for need of model update. For example, if the apparatus API to APX has different assumptions for the second model-sided hypothesis, it may compute a difference f(.) metric, such as f1(V, V1), f2(V, V2), f3(V, V3) where VI, V2, V3 are different network sided reconstruction options.

Moreover, in another embodiment, the respective sharing of the training dataset may be also used for another sub-case, particularly for the use case of channel encoding/decoding using the two-sided model (e.g. for an auto-encoder). In this case, the above-mentioned parameters may be likewise one or more of the following:
- The input X at the pre-processing of the first model side-part of the two-sided model being at least a transport block prior to code block segmentation and CRC attachment (these steps may be the pre-processing steps),
- The input Y at the first model side-part of the two-sided model being at least CRC attached code blocks,
- The output Z of the first model side-part of the two-sided model being at least coded bits after channel encoding,
- The output M' of the quantizer considered after the first model side-part of the two-sided model being at least a rate matcher while the transmission may be a rate matched coded block,
- The output Z' of the hypothetical de-quantizer considered before the hypothetical second model side-part of the two-sided model being at least recovered coded bits,
- The output Y' of the hypothetical second model side-part of the two-sided model being at least reconstructed CRC attached code blocks, and
- The output Z' of the post-processing of the hypothetical second model side-part of the two-sided model being at least recovered transport blocks.
- Further, the at least one metric that represents the relationship between the input used by the apparatus (i.e. the first model)-sided part and corresponding output at the hypothetical device (i.e. second model)-sided part f(V, V') may be for example a function corresponding to block error rates (BLER) or bit error rates (BER) etc..

In addition, in this embodiment, the purpose of the respective two-sided model could be to align on code construction sequence, channel encoder or any other parameter associated with given channel coding procedures.

Moreover, besides the aforementioned instructions on at least what to share for dataset sharing for the second model side so as to enable model training and/or updating of the device (i.e. the second model) sided part of the two-sided model, the instructions of the configuration information may be also provided with instructions regarding when to share the corresponding training data.

In one embodiment, the device DEI to DEY may be configured to select related parameters and conditions to the apparatus API to APX for dataset sharing, where parameters may define at least time instances, conditions or triggers that allow the apparatus API to APX to share one or more training datasets. Herein, the corresponding instructions may at least comprise the following:
- In one example, a trigger or time instance may be defined when the apparatus API to APX completes the initial first model side training of the two-sided model so that the dataset corresponding to the model training may be shared with the device DEI to DEY.
- In another example, a trigger or time instance may be defined when the first model side requires to update the first model side part of the two-sided model used for inference. Herein, the dataset corresponding to the model update (even such that is done already by the apparatus API to APX prior to a device DEI to DEY consent) may not be shared directly to the network. Instead, the apparatus API to APX may for example be configured to initially trigger a request for model update and subsequently conduct the dataset sharing.
- Moreover, in an additional variant, specifically in case of model updating, a potential trigger for model update/dataset sharing may be determined based on parallel monitoring activity. In particular, model update (which subsequently lead to dataset updates) may be triggered when the first model (i.e. the apparatus API to APX) sided part and the hypothetical second model sided parts (assuming multiple apparatuses API to APX existing) of the two-sided model observe different performances. For example, as described above, if the apparatus API to APX may compute different performance metrics such as f1(V, V1), f2(V, V2), f3(V, V3), where VI, V2 or V3 may be different second model sided reconstruction options available at the given apparatus API to APX, the apparatus API to APX may trigger a model update and/or a dataset sharing process depending on the values of the metrics f1, f2 or f3.

In addition, besides the aforementioned instructions on at least what to share and/or when to share for dataset sharing for the second model side so as to enable model training and/or updating of the device (i.e. the second model) sided part of the two-sided model, the instructions of the configuration information may be also provided with instructions regarding how to share the corresponding training data. Herein, the corresponding instructions may also at least comprise one or more of the following:
- In one embodiment, the instructions may specify the format of the training dataset to be shared. Specifically, the format of the dataset may correspond to the dataset dimensions or the size (e.g. the sample size), ordering of the information carried within the dataset, whether quantization is applied for entries of data or other information that allow the other party (i.e. the device DEI to DEY) to interpret the dataset.
- Further, in another embodiment, the instruction may also comprise indications on whether the dataset shall be reported via over-the-air interface, via the above-mentioned remote server (i.e. the remote server/operator server 4 mentioned in Fig. 1) or any other means which shall be known to the given apparatus AP1 to APX prior to this indication.
- Specifically, if the dataset sharing may be done via an over-the-air interface, any configurations that define reporting resources and/or periodicities and/or maximum dimensions per batch/report may be defined by the device DEI to DEY. Accordingly, the apparatus may send the training dataset in one or multiple batches based on the received configuration.
- Alternatively, if the dataset sharing may be done via the remote server/operator server 4, any configuration that may define reporting of confirmation after successful dataset upload S102 may be defined by the device DEI to DEY. Herein, the apparatus AP1 to APX may upload the training dataset and send the confirmation of the dataset upload S102 via the over-the-air interface to the device DEI to DEY.
- In addition, also same or different priority levels may be considered for the data in a dataset and some data may be also excluded from the dataset if the dataset-sharing resources may be limited.

As a consequence, with the corresponding configuration information instructed by the respective device DEI to DEY mentioned above, the dataset to be shared from the apparatus API to APX to the device DEI to DEY for two-sided AI/ML based model training may be efficiently adapted to the requirements and properties of the respective network entities.

Further, for implementing a given configuration information provided from the device DEI to DEY to the apparatus API to APX, the configuration information may comprise at least one or more information elements (IEs) that may be preferentially signaled as a part of a radio resource control (RRC) message that is defined based on reusing existing messages or may be formatted by defining a new message (e.g. named as "Data Set Configuration"). Herein, as the RRC message information elements are described using an abstract syntax notation, the corresponding configuration information message may be for example defined as follows: 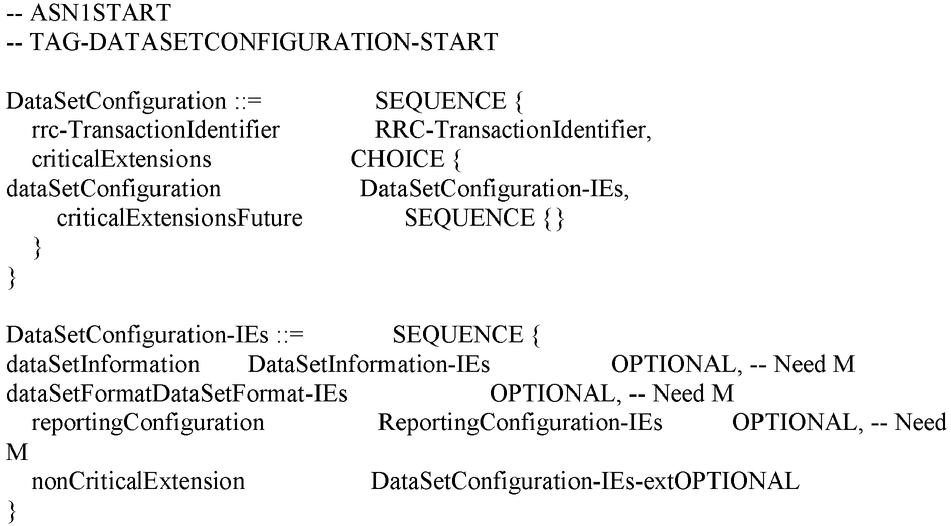 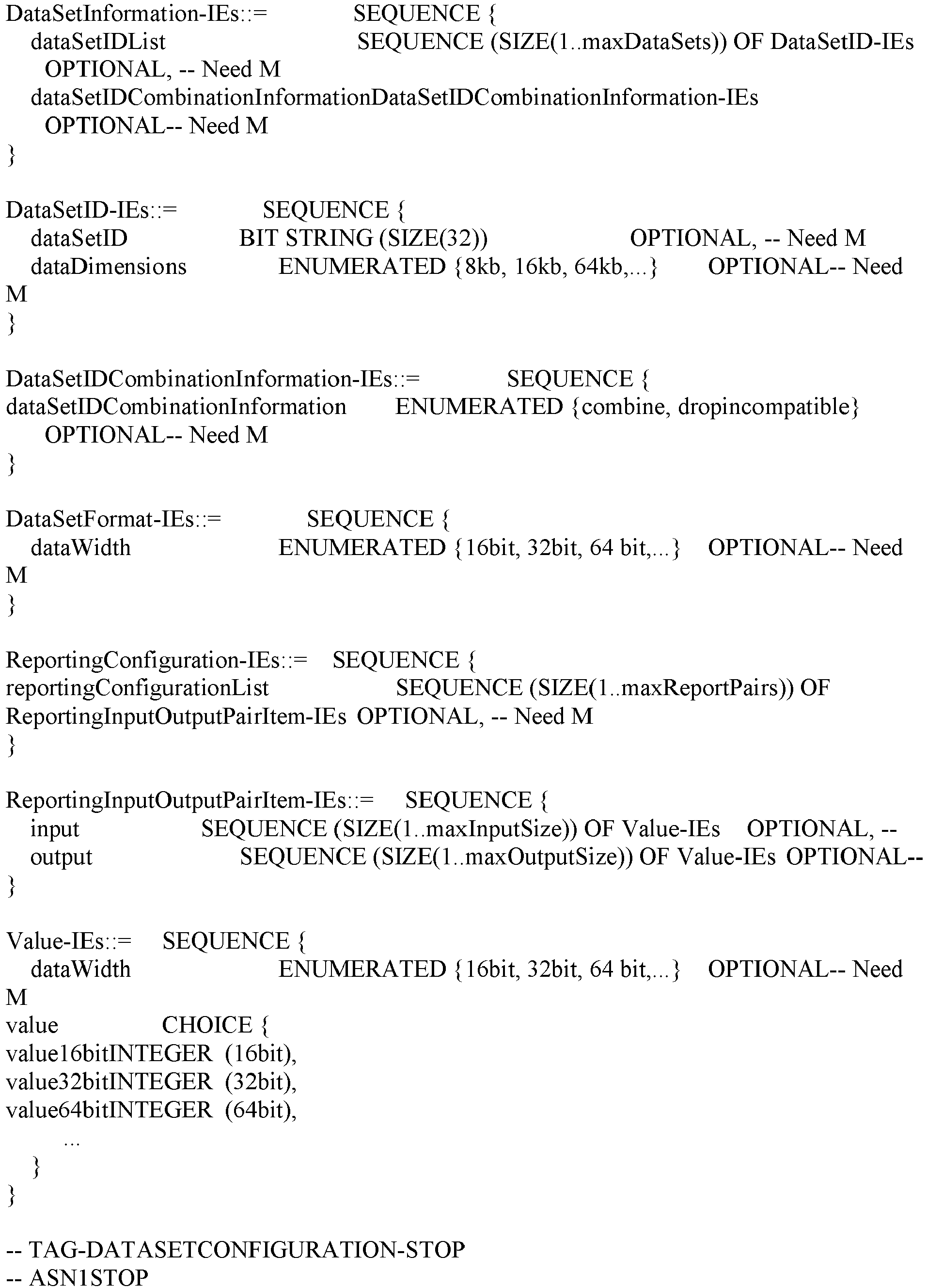 At it, the apparatus API to APX may receive the message described above, process its content in accordance to the training sequence described below and format the output in the form of input output pairs which are described in the format using the IE ReportingConfiguration-IEs.

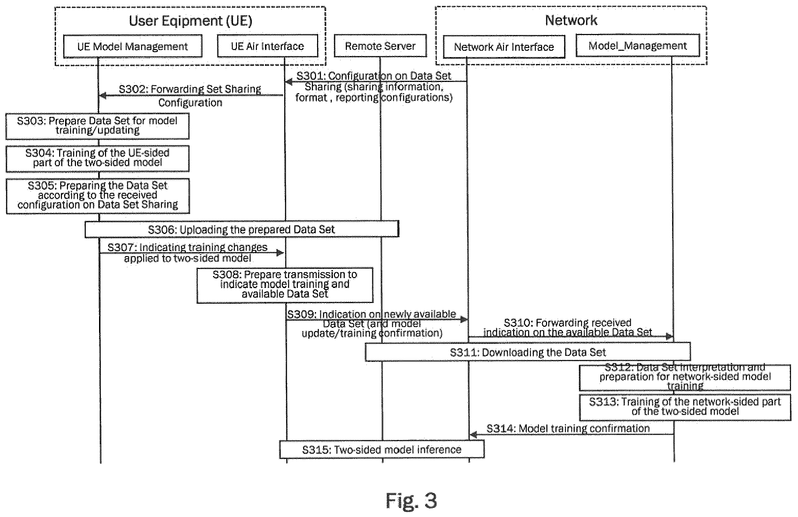

Accordingly, Fig. 3 shows an example of a respective message exchange implemented between an apparatus and a device (as DEI to DEY) of a wireless network according to one embodiment of the present invention for providing a separated and two-sided AI/ML based model training. Herein, the apparatus may be exemplary defined as a user equipment UE holding the first model side of the two sided model while the device may be defined as a device (i.e. a network entity), specifically a gNB, holding the second model side and thus is configured to send the respective configuration information to the apparatus, i.e. the UE. In another embodiment, it yet may be also possible that the apparatus and the device may be different network entities. As an example, the respective message exchange shown in Fig. 3 may be also mirrored, i.e. the UE may be rather exchanged by the network entity while the network entity (and thus its training processes) may be conducted by a given UE.

Accordingly, the sequence shown in Fig. 3 may be only one of several training processes conducted by the apparatus and/or the device, hence resulting also in a multitude of different training datasets to be shared with the device. As a consequence, a given device may be also configured to collect different set-ups of datasets for training and/or updating a two-sided AI/ML based model and may preferably select a given dataset based on predefined parameters, such as quality or reliability parameters generated within the system.

Now, referring to the message exchange shown in Fig. 3, the respective separated and two-sided AI/ML based model training process may be conducted as followed:
S301: Initially, the network prepares the configuration information for training dataset sharing. On that account, the respective configuration information may set at least three information element fields for preparing the given configuration information package, including the configuration information instructions already mentioned above, the three information elements fields may comprise:
- A "sharing information" that comprises of one or more data set identifiers that point to a set and/or batch of training samples. Specifically, each dataset identifier may be unique and may serve a specific deployment scenario for a given use case. In one example, for instance in a use case for CSI compression model training, two different data set IDs would contain training samples for two different type of codebook implementations which may further differ based on the size of the training data (e.g., 16 or 32 bite wide). Additionally, the network may further indicate to the UE to combine either the full datasets from each of the IDs or a subset thereof, for example as some samples from one dataset ID may not be compatible with the other dataset ID.
- Secondly, a "format information" may be included. Herein, "format" may describe for example a vector that includes dimensions of the data, quantization information of the data, i.e. the bit-width of the data samples or a number of training samples that the UE uses along with the "sharing information".
- Thirdly, so called "reporting configuration" may be included. Said reporting configuration may allow the network to specify what kind of information is desirable for each training sample and when said training dataset may be shared. Consequently, within the reporting configuration, also at least the aforementioned configuration information instructions regarding what, when and how dataset sharing shall be performed may be included herein. As a consequence, due to the respective content of the reporting configuration, each training sample may be construed at least based on one or a combination of the following data (while it is again referred to Fig. 2):
   ▪ The input X of the pre-processing of the respective UE-part of the two-sided model;
   ▪ The input Y at the UE-part of the two-sided model;
   ▪ The output Z at the UE-part of the two-sided model;
   ▪ The output M' of the quantizer considered after the UE-part of the two-sided model;
   ▪ The output Z' of the hypothetical de-quantizer considered before the hypothetical network-part of the two-sided model;
   ▪ The output Y' of the hypothetical network-part of the two-sided model; and
   ▪ The output Z' of the post-processing of the hypothetical network-part of the two-sided model.
   At the same time, it is yet to be understood that also other data, such as the aforementioned metrics f or additional parameters may be equally used to define a given training dataset sample.

S302 & S303: Subsequently, the UE prepares a target dataset based on the guidance provided by the network based on the information gained in S301. Specifically, the UE may initially receive the set of sharing information (S302) forwarded by the network via air-interface and thereafter prepare a given dataset for model training and/or updating (S303). For example, the UE may combine data from one or more datasets as recommended by the network and combine the data with the same format specifiers as in the "format information". Thus, at the end of this step, the UE has the dataset ready to initiate model training of the two-sided AI/ML based model.

S304: Afterwards, the UE may initiate the separated two-sided model training in accordance to the process steps at least already described for Fig. 2.

S305: Then, the UE may collect the different outputs from the first model side and hypothetical second model side training process steps (i.e. for example X, Y, Z, M', Z', Y', X') and order them as follows against each training sample:
- In one embodiment, each training sample may be constructed based on the combination of one or a combination of the following data,
   ▪ The input X at the pre-processing of the UE-part of the two-sided model,
   ▪ The input Y at the UE-part of the two-sided model,
   ▪ The output Z of the UE-part of the two-sided model,
   ▪ The output M' of the quantizer considered after the UE-part of the two-sided model,
   ▪ The output Z' of the hypothetical de-quantizer considered before the hypothetical network-part of the two-sided model,
   ▪ The output Y' of the hypothetical network-part of the two-sided model,
   ▪ The output Z' of the post-processing of the hypothetical network-part of the two-sided model.
- Additionally, each training sample may also contain additional metrics which may be derived based on the aforementioned data, specifically
   ▪ A metric that represents the relationship between the input used by the UE-sided part X and the corresponding output at the hypothetical network-sided part Y', e.g. f(Y, Y'), which could be for example a cosine similarity (dot product).
   ▪ Correspondingly, these additional metrics may be also based or dependent on the UE and/or UE-specific functions which may also be reported in the dataset or via other means towards the network.

S306: Thereinafter, the UE may upload the output from S305 to a remote server/operator server 4. Herein, the output of each network dataset assumption may be stored separately (e.g. in the storage unit 2 of the remote server 4) for the network to be able to distinguish multiple data sets existing in the system. As stated, different identifiers may be used for further distinguishments.

S307 - S309: Subsequently, the UE may indicate to the network that it has prepared the dataset(s) and the network is able to pick up the data set output from the remote server 4. For this, the UE may initially indicate any training changes to any of the systems elements, such as the network, via the air interface (S307) and then prepare the transmission to indicate model training start at the network side and the availability of the respective training data set (S308). Additionally, in S309 the availability of newly available datasets for model training and/or updating may be indicated, preferably similarly via the air interface.

S310 - S314: Afterwards, the network may retrieve the data buffer from the server which contains reference outputs of the UE and uses it to train the second model side of the two-sided AI/ML based model at the network side. Specifically, at S310, the network may initially forward received indications on the available dataset from the corresponding air interface of the network to the internal network unit (herein defined as "Model Management"). Subsequently, at S311, the network may download the respective training dataset while at S312 and S313 said dataset may be firstly interpreted and prepared by the network (S312) before the actual second model side training process may take place (S313). Furthermore, after second side model training (and thus finishing the entire two-sided model training), the network may be likewise sending a confirmation to the system (e.g. equally via the air interface) so that at the end of the training effectively, the network and UE have the AI/ML based model pairs correctly trained due to the assistance of the UE in the earlier steps.

S315: Accordingly, afterwards, two-sided model inference may be achieved via the trained two-sided AI/ML based model.

Finally, it is nevertheless to be noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

According to some example embodiments, there are also provided corresponding methods suitable to be carried out by the apparatuses (network elements/components) as described above, such as the UE etc.

Also, it should also be noted that the apparatus (or device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the network etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the network etc., as described above) that comprises respective means configured to at least perform the respective steps as described above.

It is to be noted that examples of embodiments of the disclosure are applicable to various different network configurations. In other words, the examples shown in the above-described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

### LIST OF ABBREVIATIONS

5G - 5^{th} Generation
gNB - 5G / NR base station
NR - New Radio
AI - Artificial Intelligence
ML - Machine Learning
UE - User Equipment
DCI - Downlink Control Information
MAC CE - Medium Access Control Control Element
MIMO - Multiple-Input and Multiple-Output
NN - Neural Network
CSI - Channel State Information
RS - Reference Signal
FPGA - Field Programmable Gate Array
GPU - Graphic Processing Unit
ASIC - Application Specific Integrated Circuit
BS - Base Station,
AP - Access Point
NB - NodeB
DU - Distributed Unit
CU - Centralized/Central Unit
SINR - Signal-to-Interference-plus-Noise-Ratio
NMSE - Normalized Mean Square Error

## Claims

1. Apparatus (API - APX) in a wireless network comprising:
one or more processors and
a memory storing instructions that, when executed by the one or more processors, cause the apparatus to:
(S302) receive information to configure the apparatus (API - APX) to share data to be used for training a two-sided model, the two-sided model facilitating data communication between the apparatus (API - APX) and another device (DEI - DEY) in the wireless network, the information indicating **which data to be shared** with the another device (DEI - DEY);
(S304) train at least a first side of the two-sided model by a machine learning algorithm based on training data available at the apparatus (AP1 - APX);
determine, from the training data, a data set to be shared according to the received configuration information;
(S306) transmit the determined data set for usage by the another device (DEI - DEY) to train at least the second side of the two-sided model separately from the first site.

2. Apparatus (AP1 - APX) of claim 1, wherein the apparatus (AP1 - APX) is further caused to use the first side of the two-sided model in communicating with the another device (DEI - DEY), and the configuration information indicates whether input data and/or output data of the first side of the two-sided model during the training shall be shared with the another device (DEI - DEY).

3. Apparatus (API - APX) of claim 2, wherein a hypothetical second side (HDE1) of the two-sided model is determined during training by the apparatus (AP1 - APX) and wherein the configuration information indicates whether any data used for training of the hypothetical second side (HDE1) is to be shared.

4. Apparatus (AP1 - APX) of claim 3, wherein the configuration information indicates whether a metric (f) regarding the relationship between first side training data and training data of the hypothetical second side (HDE1) is to be shared.

5. Apparatus (API - APX) of any previous claim, wherein the configuration information indicates a preconfigured data set to be shared.

6. Apparatus (AP1 - APX) of any previous claim, wherein the configuration information indicates **when to share the data** with the another device (DEI - DEY) and indicates at least one of a time instance, a sharing condition or a sharing trigger.

7. Apparatus (AP1 - APX) of any previous claim, wherein the configuration information indicates **how to share the data** with the another device (DEI - DEY) and indicates at least one of a format for sharing the data, a communication medium for sharing the data, or priorities for shared data.

8. Apparatus (AP1 - APX) of any previous claim, wherein the configuration information and/or the shared data set is transmitted by signalling (S101A; S101B; S101X) via an over-the-air interface or (S102; S103) via a remote server (4) between the apparatus (API - APX) and the another device (DEI - DEY).

9. Apparatus (AP1 - APX) of any previous claim, wherein the configuration information relates to an initial training of the two-sided model, or to an update of the two-sided model based on new training data.

10. Apparatus (API - APX) of any previous claim, wherein the configuration information comprises at least one of sharing information comprising one or more data set identifiers that point to a set/batches of data set to be shared with the another device (DEI - DEY), format information describing a vector that includes the dimension of the data set to be shared, or reporting configurations specifying data to be used for the at least first side of the two-sided model.

11. Apparatus (AP1 - APX) of any previous claim, wherein the two-sided model facilitates compression/decompression of channel state information, CSI, and the first side relates of the two-sided model to compression of information regarding the wireless channel, and the second side of the two-sided model relates to decompression of the wireless channel information.

12. Apparatus (API - APX) of any of claim 1 to 11, wherein the two-sided model facilitates channel encoding/decoding and the first side of the two-sided model relates to encoding of data for transmission to the another device (DEI - DEY), and the second side of the two-sided model relates to decoding of data received by the another device (DE1 - DEY).

13. Apparatus (AP1 - APX) of any previous claim, wherein the apparatus (API - APX) is a user equipment, UE, in the wireless network.

14. Device (DEI - DEY) in a wireless network comprising:
one or more processors and
a memory storing instructions that, when executed by the one or more processors, cause the device (DEI - DEY) to:
(S301; S302) send information to configure an apparatus (API - APX) in the wireless network to share data to be used for training a two-sided model, the two-sided model facilitating data communication between the apparatus (API - APX) and the device (DEI - DEY) in the wireless network, the information indicating **which data to be shared** by the apparatus (API - APX) with the device (DEI - DEY);
(S311) receive the shared data from the apparatus (API - APX);
(S313) train at least the second side of the two-sided model by a machine learning algorithm based on the received data.

15. Device (DEI - DEY) of claim 14, wherein the device (DEI - DEY) is a next generation radio access network, NG-RAN node, such as a gNB, in the wireless network and the apparatus (API - APX) is a user equipment, UE, in the wireless network.

16. Device (DEI - DEY) of claim 15, wherein the device (DEI - DEY) train and maintains UE-specific models, each applied for communication with an individual UE.

17. Device (DEI - DEY) of claim 15, wherein the device (DEI - DEY) receives shared data from a plurality of UEs and trains the at least the second side of the two-sided model based on a collection of the received shared data from different UEs.

18. Device (DEI - DEY) of claim 14, wherein the training of the second side of the two-sided model is at least based on a reference output of a hypothetical second side (HDE1) determined during training of the two-sided model by the apparatus (API - APX), wherein the reference output is at least a part of the shared data of the apparatus (AP1 - APX).

19. Method for training a two-sided model facilitating data communication between an apparatus (API - APX) and another device (DEI - DEY) in a wireless network, comprising:
(S302) receiving, by the apparatus (API - APX), information to configure the apparatus (API - APX) to share data to be used for training the two-sided model, the information indicating **which data to be shared** with the another device (DEI - DEY);
(S304) training at least a first side of the two-sided model by a machine learning algorithm separately from a second side of the two-sided model based on training data available at the apparatus (AP1 - APX);
determining, from the training data, a data set to be shared according to the received configuration information;
(S306) transmitting the determined data set for usage by the another device (DEI - DEY) to train at least the second side of the two-sided model separately from the first side.

20. Method for training a two-sided model facilitating data communication between an apparatus (API - APX) and another device (DEI - DEY) in a wireless network, comprising:
(S301; S302) sending information to configure the apparatus (API - APX) in the wireless network to share data to be used for training the two-sided model, the information indicating **which data to be shared** by the apparatus (API - APX) with the device (DEI - DEY);
(S311) receiving the shared data from the apparatus (API - APX);
(S313) training at least the second side of the two-sided model by a machine learning algorithm based on the received data.

21. Method of claim 19 or 20, wherein the configuration information indicates when to share the data with the another device (DEI - DEY) and/or how to share the data with the another device (DEI - DEY).

22. A computer program comprising instructions for causing an apparatus (API - APX) or a device (DE1 - DEY) to perform the method according to any of claims 19 to 21.

23. A memory storing computer readable instructions for causing an apparatus (AP1 - APX) or a device (DE1 - DEY) to perform the method according to any of claims 19 to 21.
